# EUROPÄISCHE PATENTSCHRIFT

(11) **EP 2 445 671 B1**
(45) Veröffentlichungstag und Bekanntmachung des Hinweises auf die Patenterteilung: **12.04.2017**
(21) Anmeldenummer: 10739492.6
(22) Anmeldetag: 22.06.2010
(51) Int. Cl.: B23B 13/08, B23B 13/02, B23B 13/10, B23Q 39/02

(54) **LADEMAGAZIN MIT MITFAHRENDEM KANALSYSTEM ZUM BE- UND ENTLADEN VON DREHAUTOMATEN**
STOCK FEEDER WITH MOVING CHANNEL SYSTEM FOR FEEDING AND DISCHARGING AUTOMATIC LATHES
DISPOSITIF RAVITAILLEUR À VOIES MOBILES POUR CHARGER ET DÉCHARGER DES TOURS AUTOMATIQUES

(30) Priorität: 23.06.2009 DE 102009030251
(43) Veröffentlichungstag der Anmeldung: 02.05.2012
(73) Patentinhaber: FMB Maschinenbaugesellschaft mbH & CO. KG, 97906 Faulbach (DE)
(72) Erfinder: SCHMIDT, Falk, 97900 Külsheim (DE); WICHTLHUBER, Helmut, 63897 Miltenberg (DE)
(74) Vertreter: Bill, Burkart Hartmut
(86) Internationale Anmeldenummer: PCT/EP2010/003758
(87) Internationale Veröffentlichungsnummer: WO 2010/149342

(56) Entgegenhaltungen:
- EP-A1- 1 637 256
- EP-A2- 0 999 003
- DE-A1-102007 009 296
- JP-A- 2 041 805

## Beschreibung

Die vorliegende Erfindung betrifft einen Drehautomaten mit einem Lademagazin zum Führen von Materialstangen an dem Drehautomaten mit wenigstens einem in Längsrichtung verschiebbaren Spindelstock sowie ein entsprechendes Lademagazin.

Drehautomaten zur spangebenden Bearbeitung von stangenförmigem Halbzeug, das im Folgenden als Materialstangen bezeichnet wird, sind grundsätzlich bekannt und können prinzipiell in drei verschiedene Bauformen unterteilt werden.

Ein sogenannter Kurzdrehautomat umfasst einen feststehenden Spindelstock, in dem eine Spindel mit einer zugehörigen Antriebseinheit gelagert ist. An der dem Prozessraum des Drehautomaten zugewandten Seite des Spindelstocks ist ein Spannmittel vorgesehen, welches vorzugsweise als Spannzange oder gegebenenfalls als Spannfutter ausgeführt ist. Die im Spindelstock horizontal gelagerte und drehbar angetriebene Spindel ist als Hohlwelle ausgeführt, so dass die Beladung mit den Materialstangen eines solchen Drehautomaten über dessen Spindelstockrückseite erfolgen kann. Zur Beladung ist an der Spindelstockrückseite ein sog. Stangenlader bereitgestellt, der vorzugsweise als Stangenlademagazin ausgeführt ist. Mit einem solchen Stangenlademagazin, das im Folgenden als Lademagazin bezeichnet wird, wird eine Materialstange mit ihrem spangebend zu bearbeitenden Ende von der Spindelstockrückseite durch die Hohlspindel des Drehautomaten geschoben. Dabei wird das Stangenende derart in der Spannzange gespannt, dass die Stange mit einem Überstand in den Prozessraum des Drehautomaten hineinragt, wobei der Überstand im wesentlichen einer gewünschten Werkstücklänge entspricht. Alle zur Bearbeitung notwendigen Anstell-, Zustell- und Vorschubbewegungen werden bei den Kurzdrehautomaten im Wesentlichen von dem Werkzeugschlitten ausgeführt, der somit vollständig in allen Raumrichtungen, d.h. in X-, Y- und Z-Richtung bewegbar ist.

Eine alternative Bauform für einen Drehautomaten zur Bearbeitung von Materialstangen stellt der sogenannte Langdrehautomat dar, der sich im Wesentlichen in zwei Punkten von dem zuvor dargestelltem Kurzdrehautomaten unterscheidet.

Zum einen verfügen Langdrehautomaten über einen in Längsrichtung, d.h. in Richtung der Z-Achse des Drehautomaten, verschiebbaren Spindelstock. Diese Verschiebebewegung wird durch eine eigene Antriebsachse des Spindelstocks ausgeführt, die von der Steuerung des Drehautomaten ansteuerbar ist, wobei in der Regel sog. NC-Achsen eingesetzt werden. Die Vorschubbewegung in Richtung der Z-Achse erfolgt im Langdrehprozess somit durch die Spindelstockbewegung gegen ein in Z-Richtung feststehendes Werkzeug. Der Werkzeugschlitten eines Langdrehautomaten führt somit nur An- und Zustellbewegungen in X- und Y-Richtung aus.

Des Weiteren umfasst ein gattungsbildender Langdrehautomat eine zusätzliche feststehende Führungsbuchse, die zwischen dem in Z-Richtung verfahrbaren Spindelstock und dem Werkzeug im Prozessraum des Drehautomaten angeordnet ist und für eine stabile Führung der zu bearbeitenden Materialstange sorgt. Da die Materialstangen in dem Lademagazin von einer Spannhülse am Ende einer Schubstange gehalten sind, ist eine Synchronisierungseinrichtung im Lademagazin notwendig, mit der das Lademagazin an die Bewegung der gesamten Materialstange während der durch die Spindelstockbewegung bereitgestellten Vorschubbewegung angepasst werden kann.

JP-2 041 805 A offenbart einen Drehautomaten mit einem verfahrbaren Spindelstock und einem Verbindungsmittel zur Synchronisation des Lademagazins mit den Bewegungen des Spindelstocks.

Als weitere Bauform eines Drehautomaten hat sich nach neueren Entwicklungen auch eine Mischform aus den zuvor beschriebenen Kurz- und Langdrehautomaten am Markt etabliert, die im Folgenden als Hybriddrehautomat bezeichnet wird. Ein solcher Hybriddrehautomat arbeitet mit einem in Längsrichtung verfahrbaren Spindelstock, besitzt im Gegensatz zum Langdrehautomaten jedoch keine feststehende Führungsbuchse im Bereich des Werkzeugs, so dass die Vorschubbewegung im Längsdrehprozess sowohl über den Werkzeugschlitten, als auch über den Spindelstock darstellbar ist. Gegenüber den herkömmlichen Langdrehautomaten, deren Spindelstockweg auf etwa 300 mm begrenzt ist, weisen Hybriddrehautomaten daher einen größeren möglichen Verfahrweg für die Vorschubbewegung auf, der bis zu 450 mm betragen kann.

Die an einem Drehautomaten jeweilig bereitgestellten Lademagazine müssen die Materialstangen während des gesamten Bearbeitungsvorgangs sicher führen, wobei in diesem Gesichtspunkt der Unterdrückung von Vibrationen in den Materialstangen eine wesentliche Aufgabe zukommt. Die zu bearbeitenden Materialstangen sind bis zu 6 m lang und weisen Durchmesser zwischen 1 mm bis zu 100 mm mit runden, rohrförmigen, hexagonalen oder quadratischen Querschnitten auf. In Abhängigkeit von Querschnitt und Durchmesser treten Drehzahlen von bis zu 15.000 1/min auf, weshalb sowohl eine Schwingungsprophylaxe, als auch eine aktive Unterdrückung von Schwingungen unabdingbar ist. Diese Anforderungen werden im Wesentlichen durch eine möglichst exakte Führung der Materialstangen erreicht.

Eine besonders vorteilhafte Lösung für eine solche möglichst exakte Führung der Materialstangen ist, diese in einem ölbefüllten Kanal innerhalb des Lademagazins drehbar zu lagern. Mit der schnellen Rotation der Materialstangen im Kanal tritt der Effekt einer hydrodynamischen Lagerwirkung ein, wodurch die Materialstange im Lademagazin exakt und somit schwingungsarm geführt werden.

Einen Schwachpunkt stellt aber der Übergangsbereich zwischen dem Lademagazin und dem Drehautomaten dar. Als eine letzte Stützstelle für die Materialstangen ist daher üblicherweise an der Stangenaustrittsseite eines Lademagazins eine Lünette vorgesehen, die auf den Durchmesser der Materialstange einstellbare Rollen- oder Backenabstützungen umfasst. Zwischen der Lünette des Lademagazins und dem Spannmittel des Drehautomaten ist aber ein erheblicher Übergangsbereich vorhanden, über den hinweg die Materialstangen ohne Abstützung bleiben und in dem sich somit die Entstehungszonen von Schwingungen auf den Materialstangen bilden. In dem Übergangsbereich zwischen Lademagazin und Spindelstock ist ein Übergangsrohr vorgesehen, das bei einem Lang- oder Hybriddrehautomaten als Teleskoprohr ausgebildet ist.

EP-0 999 003 A2 offenbart einen Drehautomaten mit feststehendem Spindelstock und mit einem ölbefüllten Übergangsrohr zwischen Spindel und Lademagazin zur Vibrationsdämpfung.

Bei einem ca. 400 mm großen Abstand zwischen dem Lademagazin und dem Spindelstock und einer Spindellänge von ca. 800 mm ergibt sich ein Übergangsbereich in der Größenordnung von über 1.000 mm Länge, wobei sich bei den Lang- und Hybriddrehautomaten der Übergangsbereich um den Weg der Spindelstockbewegung auf bis zu 1.600 mm erhöhen kann. Das Schwingungsverhalten im Übergangsbereich hängt wesentlich von der Länge dieses Übergangsbereichs ab.

Grundsätzlich besteht die Möglichkeit die Führungsqualität zu verbessern, indem die Durchmesser der Spindel und des Übergangsrohres für dünnere Materialstangen reduziert werden, jedoch sprechen häufig wirtschaftliche Gründe dagegen, da für wechselnde Werkstückdurchmesser sehr aufwendige Umrüstarbeiten erforderlich sind. Für eine Reduzierung auf kleinere Durchmesser müssten verschiedene, teilweise schwer zugängliche Komponenten im Drehautomat und Lademagazin getauscht werden, wenn man nicht eine drastische Drehzahlabsenkung in Kauf nehmen möchte. Letztere führt in der Regel zu einem deutlichen Produktivitätsverlust.

Vor diesem Hintergrund hat sich die vorliegende Erfindung daher die Aufgabe gestellt, die Führungsqualität von Materialstangen unabhängig von ihrem Stangendurchmesser zu erhöhen, und somit das Problem der Entstehungszonen von Schwingungen zu minimieren.

Die Lösung dieser Aufgabe ist durch die Gegenstände gemäß unabhängigen Vorrichtungsansprüchen 1 und 12 gegeben.

Bevorzugte und/oder vorteilhafte Ausführungen und Weiterbildungen sind Gegenstand der jeweiligen Unteransprüche.

Ein Lademagazin zum Führen von Materialstangen an einem Drehautomaten mit wenigstens einem in Längsrichtung verschiebbaren Spindelstock beinhaltet ein materialstangenführendes Kanalsystem, welches wenigstens einen Oberkanal, einen Unterkanal und ein Kanalöffnungssystem umfasst. Dabei ist zumindest das Kanalsystem des Lademagazins auf einer Linearachse geführt und derart an einen längsbeweglichen Spindelstock des Drehautomaten gekoppelt, so dass das stangenführende Kanalsystem mit dem Spindelstock im Schleppbetrieb synchron bewegbar ist, wobei zwischen Kanalsystem und Spindelstock ein Übergangsrohr vorgesehen ist.

Die Erfindung ermöglicht es somit, den Abstand zwischen Lademagazin und Spannzange im Vergleich zum Stand der Technik erheblich zu verkleinern und über alle Betriebsphasen hinweg konstant zu halten. Somit wird die Möglichkeit zur Entstehung unerwünschter Schwingungen auf einer spangebend zu bearbeitenden Materialstange erheblich verringert.

Das Kanalsystem ist in Längsrichtung verschiebbar gelagert und kann von einer NC-Achse oder einem Linearmotor angetrieben sein.

Bevorzugter Weise sind Spindelstock und Kanalsystem durch eine mechanische Verbindung miteinander gekoppelt, wobei die mechanische Kopplung eine synchrone Bewegung zwischen Spindelstock und Kanalsystem gewährleistet.

In besonders bevorzugter Ausgestaltung der Erfindung ist die Längsbewegung des mechanisch mit dem Spindelstock gekoppelten Kanalsystems durch die NC-Achse oder den Linearmotor unterstützbar. Die Achsantriebe arbeiten dann in Form eines Servoantriebs und reduzieren somit die Kräfte, die vom Spindelstock zur Längsbewegung des Kanalsystems aufgebracht werden müssen. Die Antriebssteuerung kann direkt durch das Lademagazin erfolgen, so dass keine Schnittstellenverbindung zum Drehautomaten erforderlich ist.

In einer alternativen Ausführung zur mechanischen Kopplung von Spindelstock und Kanalsystem erfolgt die Steuerung der NC-Achse oder des Linearmotors durch den Drehautomaten, so dass der Spindelstock mit dem Kanalsystem durch eine elektronische Verbindung gekoppelt ist.

In dem Lademagazin können ein zusätzlicher Antrieb und eine Schubstange mit einer Spannhülse umfasst sein, wobei die Schubstange mit der Spannhülse in Längsrichtung bewegbar und zum Vorschub der Materialstangen geeignet ist. In einer einfachen Ausführungsform sind Antrieb und Schubstange mit Spannhülse mechanisch mit dem Kanalsystem gekoppelt und mit dem Stangenvorschub gemeinsam mit diesem bewegbar.

Alternativ sind Antrieb und Schubstange mit Spannhülse unabhängig vom Kanalsystem bewegbar und also zweckmäßig ortfest im Lademagazin angeordnet, wobei die Steuerung der Schubstange bevorzugt durch eine
Synchronisierungseinrichtung erfolgt, wodurch Wegeungenauigkeiten bei dem Vorschub der Materialstangen vermeidbar sind.

Des Weiteren kann zwischen Lademagazin und Übergangsrohr und/oder zwischen Übergangsrohr und Spindelstock wenigstens eine zusätzliche Lünette vorgesehen sein, mit der die Führung der Materialstange weiter gesteigert wird.

Für eine weitere Steigerung der Führungsqualität sind die Durchmesser von dem Übergangsrohr und der Spindelbohrung durch rohrförmige Einsätze reduzierbar.

Eine Ausführungsform sieht folglich vor, dass das Lademagazin an einem als Hauptspindelstock ausgebildeten Spindelstock des Drehautomaten zum Zuführen von Materialstangen und Beladen des Drehautomaten mit Materialstangen zu koppeln oder gekoppelt ist.

Eine weitere Ausführungsform sieht ferner vor, dass das Lademagazin an einem als Gegenspindelstock ausgebildeten Spindelstock des Drehautomaten zum Herausführen von Materialstangen und Entladen des Drehautomaten zu koppeln oder gekoppelt ist.

Ein besonders bevorzugtes System im Rahmen der vorliegenden Erfindung besitzt daher einen Drehautomaten, ein erstes Lademagazin gemäß der Erfindung und ein zweites Lademagazin gemäß der Erfindung, wobei jedoch das erste Lademagazin mit einem als Hauptspindelstock ausgebildeten Spindelstock des Drehautomaten gekoppelt ist, und das zweite mit einem als Gegenspindelstock ausgebildeten Spindelstock gekoppelt ist.

Diese und weitere Merkmale sowie weitere damit einhergehende Vorteile der Erfindung ergeben sich aus der nachfolgenden näheren Beschreibung bevorzugter Ausführungsbeispiele unter Bezugnahme auf die beigefügten Zeichnungen. In den Zeichnungen zeigen:
- Abb. 1:: Kurzdrehautomat mit einem Lademagazin nach Stand der Technik.
- Abb. 2:: Langdrehautomat mit einem Lademagazin nach Stand der Technik.
- Abb. 3:: Hybriddrehautomat mit einem Lademagazin nach Stand der Technik.
- Abb. 4:: Eine erste Ausführung eines erfindungsgemäßen Lademagazins mit einem in Längsrichtung verschiebbaren Führungskanal.
- Abb. 5:: Eine alternative Ausführung der Erfindung mit einem in Längsrichtung verschiebbaren Lademagazin.
- Abb. 6:: Lademagazin mit einer vom Drehautomaten gesteuerten NC-Achse.
- Abb. 7:: Lademagazin mit einer vom Drehautomaten gesteuerten Linearachse.
- Abb. 8:: Lademagazin mit längsverschiebbarem Kanalsystem und ortsfestem Stangenantrieb und Spannhülse.
- Abb. 9:: Lademagazin mit längsverschiebbaren Kanalsystem und Synchronisierungseinrichtung zur Koordinierung der Stangenbewegung.
- Abb. 10:: Lademagazin mit Einsatzrohren für reduzierte Stangendurchmesser.
- Abb. 11:: Entladevorrichtung an einem Gegenspindelstock eines Drehautomaten nach dem Stand der Technik.

- Abb. 12:: Entladevorrichtung an einem Gegenspindelstock eines Drehautomaten mit erfindungsgemäßem Lademagazin.
- Abb. 13:: Lademagazin mit Lünetten zur Abstützung zwischen Lademagazin und Übergangsrohr sowie Übergangsrohr und Spindelstock.

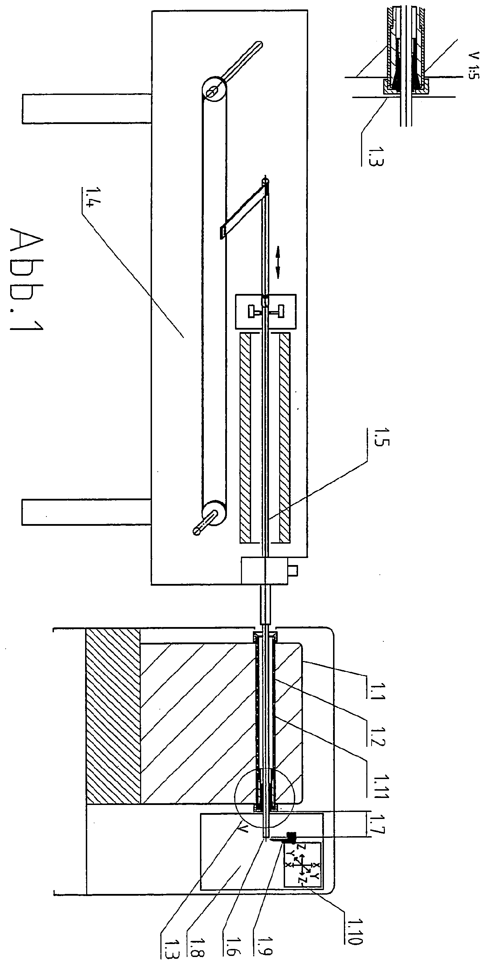

Die Abb. 1 zeigt einen Kurzdrehautomat mit einem Lademagazin 1.4 für Materialstangen 1.5 gemäß Stand der Technik. Der Drehautomat umfasst einen feststehenden Spindelstock 1.1, der eine Antriebseinheit und eine Spindel 1.2 beinhaltet. Die Spindel 1.2 weist eine Längsbohrung 1.11 auf, durch die dem Drehautomaten die Materialstange 1.5 aus dem Lademagazin 1.4 zuzuführen ist. Die Beladung erfolgt somit über die Spindelstockrückseite des Drehautomaten. Am prozessraumseitigen Ende der Spindel ist eine Spannzange 1.3 dargestellt, mit der das Stangenende 1.6 derart gespannt ist, dass die Materialstange 1.5 mit einem Überstand 1.7, der im Wesentlichen der Länge eines zu fertigenden Werkstücks entspricht, in den Prozessraum 1.8 des Drehautomaten hineinragt. Alle für den Drehprozess notwendigen Anstell-, Zustell- und Vorschubbewegungen werden von dem Werkzeugschlitten 1.9 ausgeführt, der Bewegungen in allen Raumrichtungen ausführen kann, insbesondere auch die Bewegung in Richtung der Z-Achse 1.10, die parallel zur Spindel- und Drehautomatenmitte verläuft.

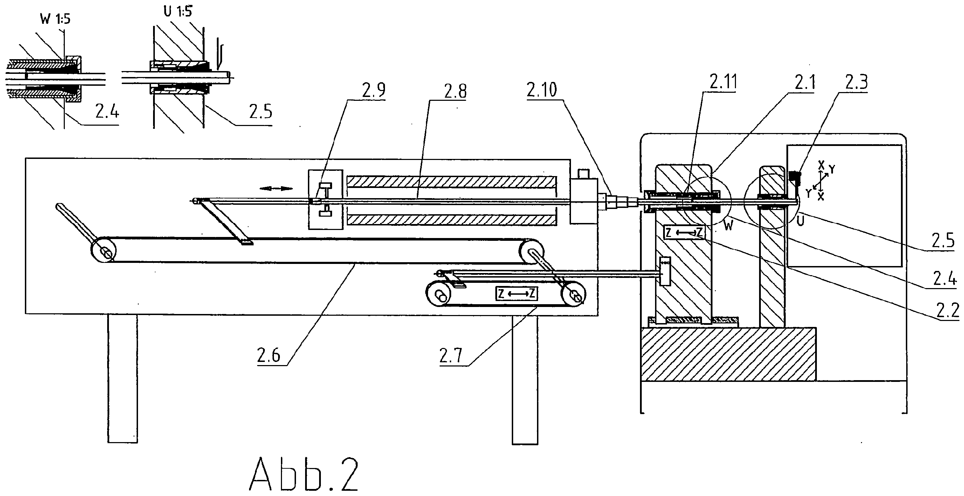

In der Abb. 2 ist ein herkömmlicher Langdrehautomat mit einem Lademagazin 2.6 dargestellt. Der Drehautomat verfügt über einen längs, in Richtung der Z-Achse 2.2 verschiebbaren Spindelstock 2.1, wobei die Verschiebebewegung durch eine eigene, im Detail nicht dargestellte Antriebsachse (z.B. eine NC-Achse) ausgeführt wird. Der Spindelstock beinhaltet eine drehbar angetriebene Hohlspindel 2.11, an deren werkzeug- bzw. prozessraumseitigen Ende eine Spannzange 2.4 vorgesehen ist, mit dem eine aus dem Lademagazin 2.6 durch die Spindel 2.11 geführte Materialstange 2.8 gespannt wird. Das im Prozessraum des Drehautomaten angeordnete Werkzeug 2.3 führt nur An- und Zustellbewegungen in X- und Y-Richtung aus. Die für den Langdrehprozess notwendigen Vorschubbewegungen in Richtung der Z-Achse werden durch die Bewegung von Spindelstock und Materialstange gegen ein in Z-Richtung feststehendes Werkzeug ausgeführt. Wie in der Abb. 2 dargestellt ist, verfügen Langdrehautomaten neben der Spannzange 2.4 über eine in Z-Richtung feststehende Führungsbuchse 2.5, die zur Führung der Materialstange dient. Das Lademagazin umfasst neben einem stangenführenden Kanal eine in Z-Richtung angetriebene Schubstange, an deren Ende eine Spannhülse 2.9 zur Aufnahme der Materialstange vorgesehen ist. Mit der Schubstange erfolgt die Beladung des Drehautomaten bzw. Nachführung der Materialstangen. Um ein Herausziehen der Materialstange 2.8 aus der schubstangenseitigen Spannhülse 2.9 während den, durch die Spindelstockbewegungen verursachten, Längsbewegungen der Materialstange zu verhindern, ist in dem Lademagazin eine zuschaltbare Synchronisierungseinrichtung 2.7 vorgesehen. Mit dieser Einrichtung werden die Bewegungen der Schubstange mit denen der Materialstange synchronisiert.

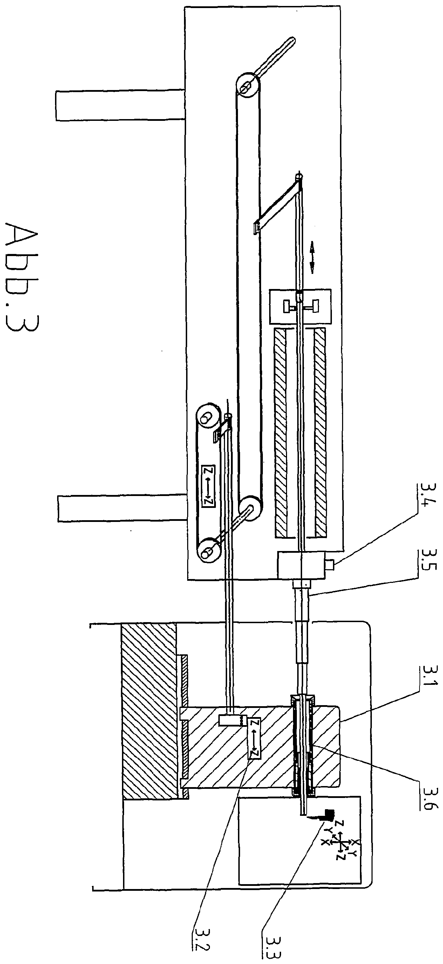

Ein Hybriddrehautomat ist beispielhaft in Abb. 3 skizziert. Diese Gattung von Drehautomaten umfasst einen in Richtung der Z-Achse 3.2 verschiebbaren Spindelstock 3.1, der mit einer Hohlspindel 3.6 ausgerüstet ist. Die Vorschubbewegungen in Richtung der Z-Achse sind sowohl über den Spindelstock 3.1, als auch über den Werkzeugschlitten 3.3 darstellbar, wobei der Werkzeugschlitten ausgebildet ist, sämtliche Bewegungen in X-, Y- und Z-Richtung auszuführen. Die Materialstangen sind während des Drehprozesses im Wesentlichen von der Spannzange in der dem Prozessraum des Drehautomaten zugewandten Seite der Spindel 3.6 und von dem Lademagazin geführt. Im Bereich zwischen Lademagazin und Drehautomat befinden sich keinerlei Einrichtungen zur Abstützung und exakten Führung der Materialstangen. Dieser Übergangsbereich stellt somit eine Entstehungszone für das Auftreten von Schwingungen dar. Zur Schwingungsprophylaxe ist an der Stangenaustrittsseite des Lademagazins üblicher Weise eine Lünette 3.4 vorgesehen, die einstellbare Rollen- oder Backenabstützungen als eine nochmalige letzte Stützstelle bildet. Danach folgt ein Übergangsrohr 3.5, welches sowohl bei den Hybrid-, als auch bei den Langdrehautomaten (vgl. Abb. 2) als Teleskoprohr ausgeführt ist, um die Bewegungen des Spindelstocks auszugleichen.

Bei den Langdrehautomaten (Abb. 2) und Hybriddrehautomaten (Abb. 3) kann in Abhängigkeit von der Position des Spindelstocks eine Materialstange über eine Länge von bis zu 1.600 mm ohne Abstützung zwischen der Lünette und der Spannzange der Spindel geführt sein.

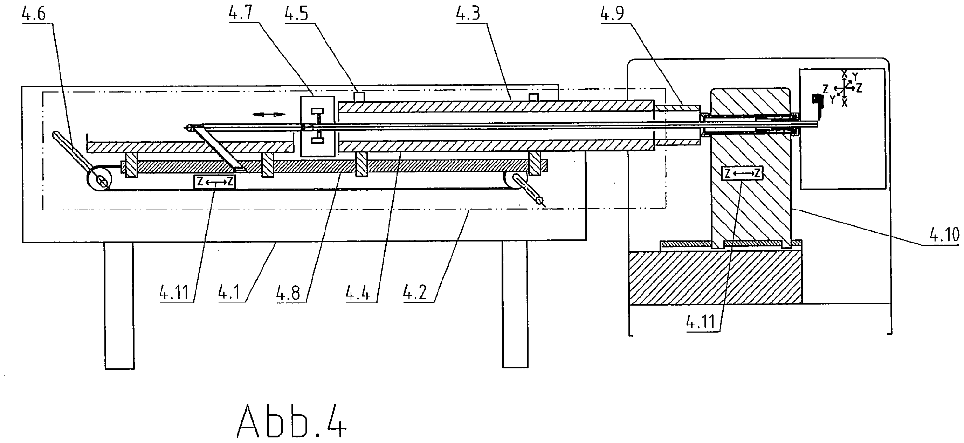

In der Abb. 4 ist ein schematischer Querschnitt durch ein Lademagazin mit mitfahrendem Kanalsystem zum Führen von Materialstangen an einem Drehautomaten dargestellt, wobei hierzu gemäß der vorliegenden Erfindung das stangenführende Kanalsystem mit einem Spindelstock des Drehautomaten im Schleppbetrieb synchron bewegbar gekoppelt ist.

Im rechten Teil der Zeichnung ist ein Hybriddrehautomat dargestellt, der, wie zuvor bereits beschrieben, einen in Richtung der Z-Achse 4.11 verschiebbaren Spindelstock 4.10 aufweist, mit dem während eines Bearbeitungsvorgangs die Vorschubbewegungen in Richtung der Z-Achse zumindest teilweise ausführbar sind. Alternativ könnte die vorliegende Erfindung auch bei einem Langdrehautomaten einsetzbar sein. Da, wie das ersichtlich und nachfolgend näher beschrieben ist, eine Kopplung zwischen Lademagazin und Spindelstock zum Zuführen von Materialstangen und Beladen des Drehautomaten gegeben ist, wird ein solcher Spindelstock auch als Hauptspindelstock bezeichnet.

Das in der Abb. 4 dargestellte Lademagazin 4.1 beinhaltet ein Kanalsystem 4.2, in dem eine Materialstange geführt bzw. gelagert ist. Derartige Kanalsysteme bestehen im Wesentlichen aus einem ölbefüllten Kanal, der zur Beladung mit Materialstangen geöffnet werden kann. Dazu ist der Kanal in einen Oberkanal 4.3 und einen Unterkanal 4.4 unterteilt, wobei der Oberkanal als ein Kanalöffnungssystem 4.5 vorgesehen ist.

Während des Drehvorgangs wird die Ölfüllung in dem Kanal durch die schnell rotierenden Materialstangen in Turbulenz versetzt, wobei zumindest dünne Materialstangen durch die entstehenden Wirbel in der Ölfüllung im Zentrum des Kanals Führung finden. Bei stärkeren Durchmessern werden die Materialstangen über die sogenannte hydrostatische Lagerwirkung im Zentrum des Kanals geführt.

Das dargestellte Kanalsystem beinhaltet eine Schubstange, mit einem Greifer bzw. einer Spannhülse 4.7, mit der eine Materialstange gehalten wird und über einen Antrieb 4.6 in Längsrichtung durch die Spindelstockrückseite dem Drehautomaten zuführbar ist.

In einer ersten erfindungsgemäßen Ausführungsform ist vorgesehen, das gesamte Kanalsystem des Lagemagazins, inklusive Schubstange mit Antrieb 4.6 und Spannhülse 4.7, auf einem Schienensystem 4.8 bzw. einer Linearachse in Richtung der Z-Achse 4.11 verschiebbar zu lagern. Am ausgangsseitigen Ende des ölbefüllten Kanals ist ein kurzes Übergangsrohr vorgesehen, das den Spindelstock 4.10 des Drehautomaten mit dem Kanalsystem kraftschlüssig verbindet. Somit sind die bei den Spindelstockbewegungen in Z-Richtung auftretenden Zug- und Druckkräfte über das Übergangsrohr auf das ebenfalls in der Z-Achse beweglich gelagerte Kanalsystem übertragbar.

Im Vergleich zum Stand der Technik ist der Abstand zwischen dem Kanalsystem und der Spannzange eines Lang- bzw. Hybriddrehautomaten deutlich reduziert und weist vor allem über alle Betriebsphasen hinweg eine konstante Länge auf.

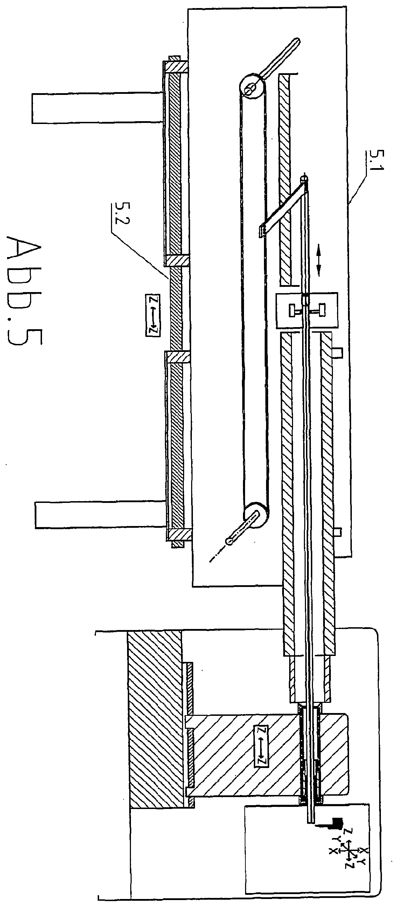

In Abb. 5 ist eine zweite, alternative Ausführungsform der vorliegenden Erfindung dargestellt. Im Unterschied zu der ersten Ausführungsform ist hier das gesamte Lademagazin 5.1 auf einer Linearachse 5.2 gelagert und in Richtung der Z-Achse verschiebbar.

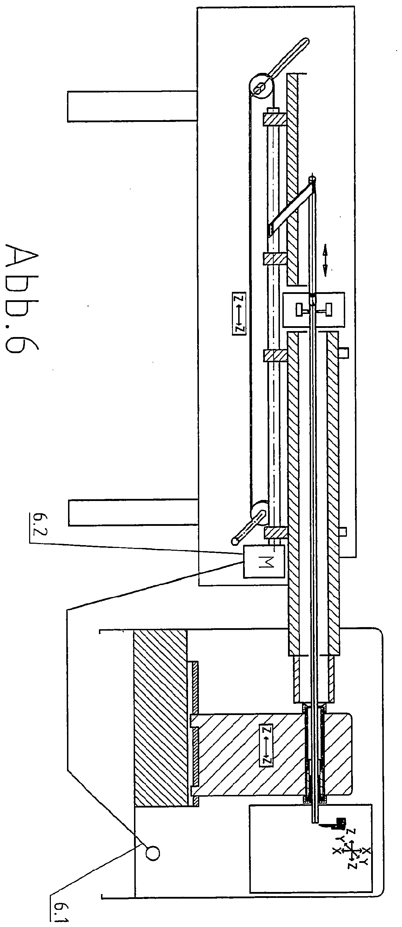

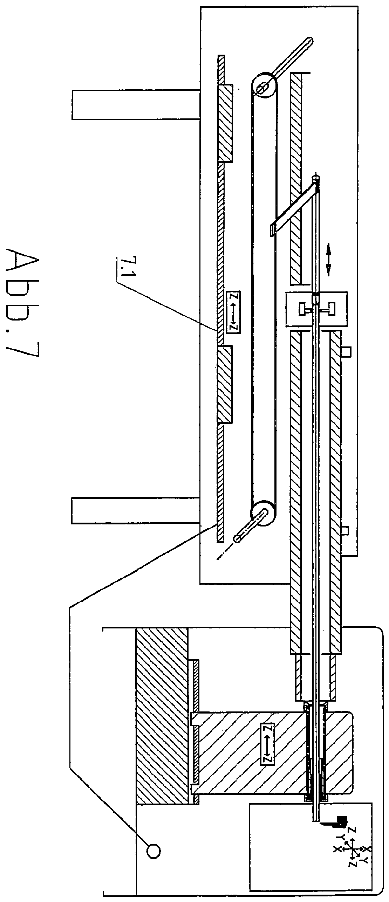

Abb. 6 und Abb. 7 zeigen weitere Ausführungsformen der Erfindung, bei denen die Längsbewegung des Kanalsystems in Richtung der Z-Achse nicht über eine mechanische Anbindung erfolgt, sondern über eine vom Drehautomaten 6.1 gesteuerte bzw. geregelte NC-Achse 6.2 oder in Form eines Linearmotors 7.1 realisiert ist. Alternativ kann eine solche NC-Achse oder ein Linearmotor parallel zu der mechanischen Anbindung vorgesehen sein, und in Art und Weise eines Servoantriebs zur Verringerung der von dem Spindelstock aufzubringenden Kräfte beitragen. In diesem Fall können die Antriebe auch ohne NC-Steuerung gefahren werden, wobei der Antrieb direkt durch das Lademagazin erfolgen kann.

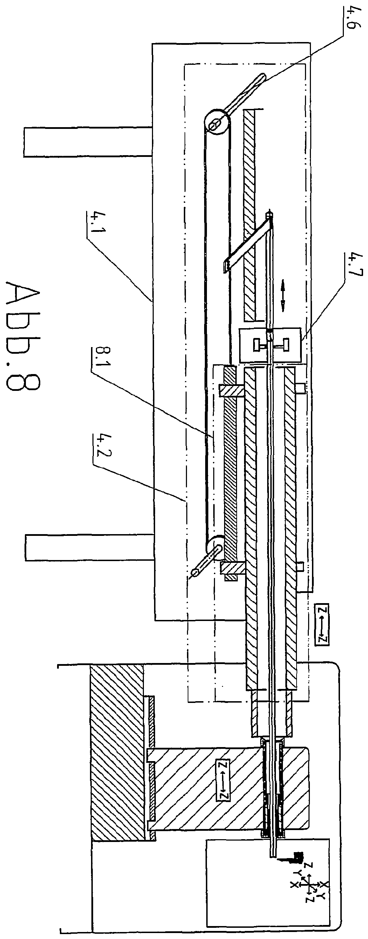

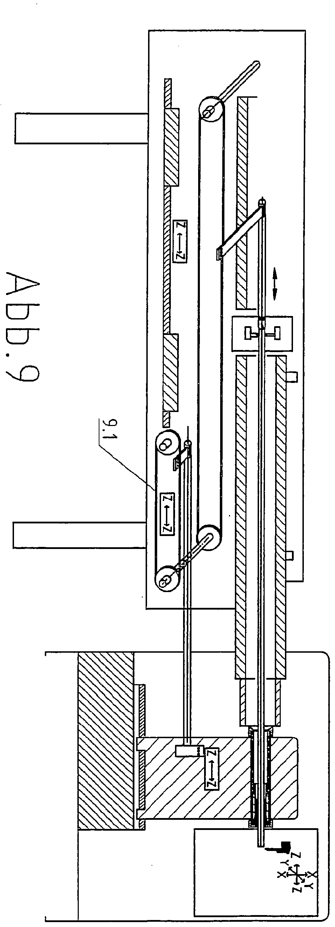

In einer weiteren Variante gemäß Abb. 8 der vorliegenden Erfindung kann auch nur der ölgefüllte Kanal 8.1 des Kanalsystems 4.2 längsverschiebbar im Lademagazin 4.1 gelagert und an den Spindelstock angebunden sein, während die Schubstange mit ihrer Spannhülse 4.7 und dem Antrieb 4.6 ortsfest im Lademagazin angeordnet ist. In diesem Fall könnte gemäß Abb. 9 zusätzlich eine Synchronisierungseinrichtung 9.1 zur Koordinierung der Stangenbewegung, insbesondere zur Vermeidung von Wegeungenauigkeiten eingesetzt werden.

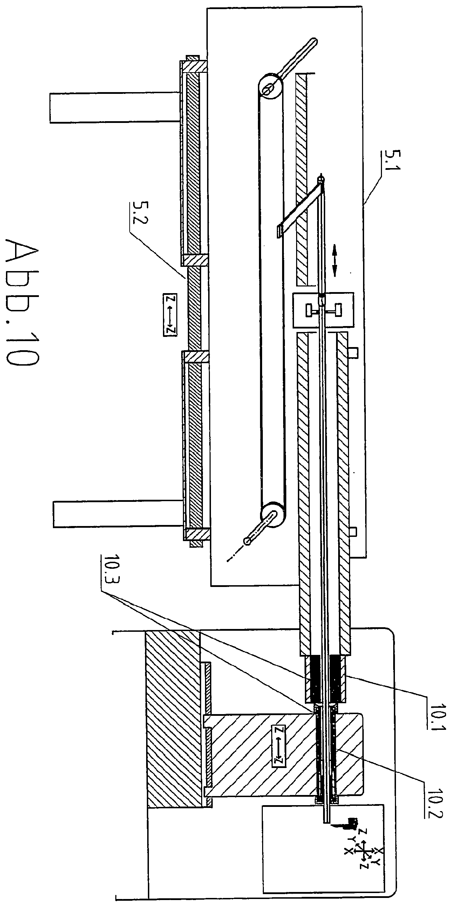

Eine zusätzliche Schwingungsunterdrückung kann gemäß Abb. 10 mit Einsatzrohren 10.3 erreicht werden, die zur Durchmesserreduktion in die Spindelbohrung 10.2 sowie in das Übergangsrohr 10.1 eingesetzt werden können.

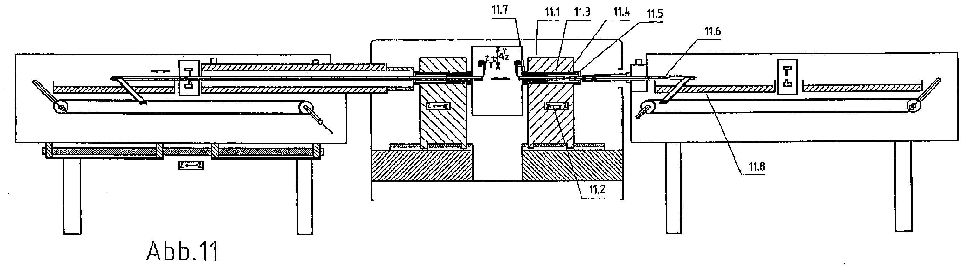

Wie in Abb. 11 dargestellt, sind Drehautomaten häufig mit einem Gegenspindelstock 11.1 ausgestattet, der zur Rückseitenbearbeitung von Werkstücken dient. Ein solcher Gegenspindelstock übernimmt die Werkstücke während der Bewegung in Z-Richtung 11.2 von dem Spindelstock bzw. Hauptspindelstock des Drehautomaten. Ein fertiges Werkstück wird dabei durch die Hohlbohrung 11.4 der Spindel 11.3 entnommen, indem eine federbeaufschlagte Spannhülse 11.5 über das Werkstückende geschoben wird, die an einer an einer Schubstange 11.6 befestigt ist. Während der Entnahme öffnet sich die Spannvorrichtung 11.7 des Gegenspindelstocks, so dass das Werkstück nach hinten durch die Spindel herausgezogen wird.

Der Aufbau einer an einem Gegenspindelstock bereitgestellten Entladevorrichtung kann einem Lademagazin zum Zuführen sehr ähnlich sein, wobei der Kanal 11.8 gemäß Stand der Technik in der Regel als eine einfache Rinne mit prismatischem Querschnitt oder eine profilierte Rollenführung ausgebildet ist. Für bestimmte Anwendungen, insbesondere bei der Bearbeitung von Werkstücken, die wesentlich länger als die Spindel ausfallen, sind auf der Gegenspindelstockseite in der Regel die gleichen Funktionalitäten erforderlich, wie bei den Lademagazinen auf der Seite des Hauptspindelstocks zum Beladen des Drehautomaten.

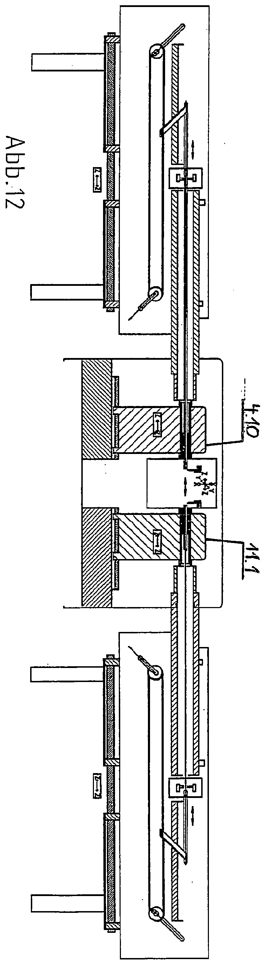

Wie in Abb. 12 dargestellt, ist das erfindungsgemäße Lademagazin bevorzugt auch zum Herausführen von Materialstangen und Entladen des Drehautomaten zu verwenden, da aufgrund des in Z-Richtung verschiebbaren Gegenspindelstocks 11.1 die gleichen Schwingungsprobleme und Anbindungsprobleme wie auf der Beladeseite bestehen.

Abb. 12 zeigt somit ein besonders bevorzugtes System, das einen Drehautomaten, ein erstes Lademagazin, und ein zweites Lademagazin besitzt, wobei jedoch das erste Lademagazin mit einem als Hauptspindelstock ausgebildeten Spindelstock 4.10 des Drehautomaten gekoppelt ist, und das zweite mit einem als Gegenspindelstock 11.1 ausgebildeten Spindelstock gekoppelt ist.

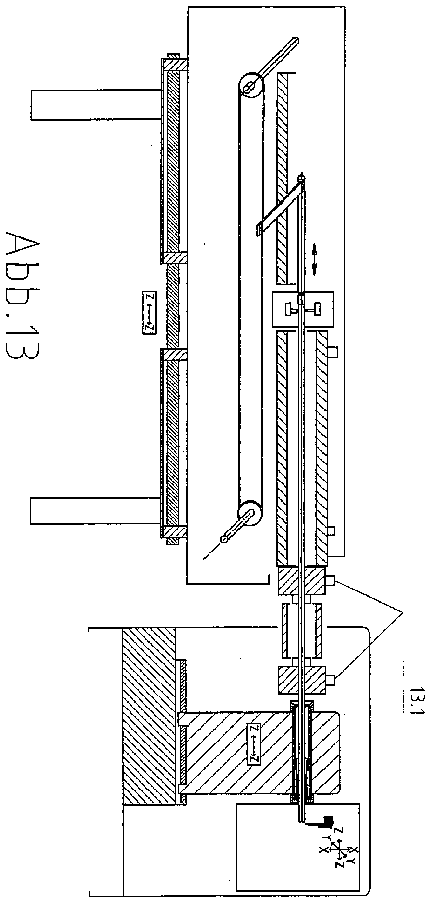

Die Abb. 13 zeigt ein erfindungsgemäßes Lademagazin, wobei zur zusätzlichen Abstützung der Materialstangen im Übergangsbereich zwei Lünetten 13.1 zwischen Lademagazin und Übergangsrohr sowie zwischen Übergangsrohr und Spindelstock vorgesehen sind.

## Patentansprüche

1. Drehautomat mit einem Lademagazin (4.1) zum Führen von Materialstangen an dem Drehautomaten mit wenigstens einem in Längsrichtung verschiebbaren Spindelstock (4.10, 11.1), wobei das Lademagazin (4,1) ein materialstangenführendes Kanalsystem (4.2) beinhaltet, welches wenigstens einen Oberkanal (4.3), einen Unterkanal (4.4) und ein Kanalöffnungssystem (4.5) umfasst, **dadurch gekennzeichnet, dass** zumindest das Kanalsystem (4.2) des Lademagazins (4.1) auf einer Linearachse (5.2) geführt und derart an den längsbeweglichen Spindelstock (4.10, 11.1) des Drehautomaten gekoppelt ist, dass das stangenführende Kanalsystem (4.2) mit dem längsbeweglichen Spindelstock (4.10, 11. 1) im Schleppbetrieb synchron bewegbar ist, wobei zwischen dem Kanalsystem (4.2) und dem längsbeweglichen Spindelstock (4.10, 11.1) ein Übergangsrohr (4.9) vorgesehen ist,
wobei das Übergangsrohr den längsbeweglichen Spindelstock (4.10, 11.1) des Drehautomaten mit dem Kanalsystem kraftschlüssig verbindet, so dass der längsbewegliche Spindelstock (4.10, 11.1) und das Kanalsystem (4.2) durch eine mechanische Verbindung miteinander gekoppelt sind,
und/oder, wobei das Kanalsystem von einer NC-Achse oder einem Linearmotor angetrieben ist, wobei die Steuerung der NC-Achse (6.2) oder des Linearmotors (7.1) durch den Drehautomaten erfolgt und der Spindelstock (4.10) mit dem Kanalsystem (4.2) durch eine elektronische Verbindung gekoppelt ist.

2. Vorrichtung nach Anspruch 1, **dadurch gekennzeichnet, dass** die Längsbewegung des mechanisch mit dem Spindelstock (4.10) gekoppelten Kanalsystems (4.2) durch die NC-Achse (6.2) oder den Linearmotor (7,1) unterstützbar ist.

3. Vorrichtung nach einem der Ansprüche 1 bis 2, **dadurch gekennzeichnet, dass** das Lademagazin (4,1) zusätzlich einen Antrieb (4.6) und eine Schubstange mit einer Spannhülse (4.7) umfasst, wobei die Schubstange mit der Spannhülse (4.7) in Längsrichtung bewegbar und zum Vorschub der Materialstangen geeignet ist.

4. Vorrichtung nach Anspruch 3, **dadurch gekennzeichnet, dass** der Antrieb (4.6) und die Schubstange mit der Spannhülse (4.7) unabhängig von dem Kanalsystem bewegbar sind.

5. Vorrichtung nach Anspruch 4, **dadurch gekennzeichnet, dass** der Antrieb und die Schubstange mit der Spannhülse (4.7) über eine Synchronisierungseinrichtung (9.1) bewegbar sind.

6. Vorrichtung nach einem der Ansprüche 1 bis 4, **dadurch gekennzeichnet, dass** das Lademagazin (5.1) gemeinsam mit dem Kanalsystem bewegbar ist.

7. Vorrichtung nach einem der Ansprüche 1 bis 6, **dadurch gekennzeichnet, dass** zwischen Lademagazin (4.1, 5.1) und Übergangsrohr und/oder zwischen Übergangsrohr und Spindelstock (4.10) wenigstens eine zusätzliche Lünette (3.4) vorgesehen ist.

8. Vorrichtung nach einem der Ansprüche 1 bis 7, **dadurch gekennzeichnet, dass** die Durchmesser von dem Übergangsrohr (10.1) und einer Spindelbohrung (10.2) im Spindelstock (4.10) durch rohrförmige Einsätze (10.3) reduzierbar sind.

9. Vorrichtung nach einem der Ansprüche 1 bis 8, **dadurch gekennzeichnet, dass** das Lademagazin an einem als Hauptspindelstock ausgebildeten Spindelstock (4.10) des Drehautomaten zum Zuführen von Materialstangen und Beladen des Drehautomaten mit Materialstangen gekoppelt oder koppelbar ist.

10. Vorrichtung nach einem der Ansprüche 1 bis 8, **dadurch gekennzeichnet, dass** das Lademagazin an einem als Gegenspindelstock ausgebildeten Spindelstock (11.1) des Drehautomaten zum Herausführen von Materialstangen und Entladen des Drehautomaten gekoppelt oder koppelbar ist.

11. System umfassend ein erstes und ein zweites Lademagazin (4.1, 5.1) wie in einem der Ansprüche 1 bis 8 definiert, sowie einen Drehautomaten, wobei jedoch das erste Lademagazin (4.1, 5.1) mit einem als Hauptspindelstock ausgebildeten Spindelstock (4.10) des Drehautomaten gekoppelt ist, und das zweite mit einem als Gegenspindelstock ausgebildeten Spindelstock (11.1) gekoppelt ist.

12. Lademagazin (4.1) zum Führen von Materialstangen an einem Drehautomaten mit wenigstens einem in Längsrichtung verschiebbaren Spindelstock (4.10, 11.1), wobei das Lademagazin (4.1) ein materialstangenführendes Kanalsystem (4.2) beinhaltet, welches wenigstens einen Oberkanal (4.3), einen Unterkanal (4.4) und ein Kanalöffnungssystem (4.5) umfasst, **dadurch gekennzeichnet, dass** zumindest das Kanalsystem (4.2) des Lademagazins (4.1) auf einer Linearachse (5.2) geführt und derart an den längsbeweglichen Spindelstock (4.10, 11.1) des Drehautomaten koppelbar ist, dass das stangenführende Kanalsystem (4.2) mit dem längsbeweglichen Spindelstock (4.10, 11. 1) im Schleppbetrieb synchron bewegbar ist, wobei zwischen dem Kanalsystem (4.2) und dem längsbeweglichen Spindelstock (4.10, 11.1) ein Übergangsrohr (4.9) vorgesehen ist, wobei mittels des Übergangsrohrs der längsbewegliche Spindelstock (4.10, 11.1) des Drehautomaten mit dem Kanalsystem kraftschlüssig verbindbar ist, so dass der längsbewegliche Spindelstock (4.10, 11.1) und das Kanalsystem (4.2) durch eine mechanische Verbindung miteinander koppelbar sind, und/ oder, wobei das Kanalsystem von einer NC-Achse oder einem Linearmotor angetrieben ist, wobei die NC-Achse (6.2) oder der Linearmotor (7.1) durch den Drehautomaten steuerbar ist und der Spindelstock (4.10) mit dem Kanalsystem (4.2) durch eine elektronische Verbindung koppelbar ist.

13. Lademagazin nach Anspruch 12 mit den Merkmalen eines Lademagazins gemäß einer Vorrichtung nach einem der Ansprüche 1 bis 10.

## Claims

1. Automatic lathe with a loading magazine for guiding bar material on said automatic lathe with at least one spindle head (4.10, 11.1) that is displaceable in the longitudinal direction, wherein the loading magazine (4.1) comprises a bar material -guiding channel system (4.2), which system comprises at least one upper channel (4.3), a lower channel (4.4) and a channel opening system (4.5), **characterized in that** at least the channel system (4,2) of the loading magazine (4.1) is guided on a linear axis (5.2) and thereby coupled to the spindle head (4.10, 11.1), which can be moved in a longitudinal manner, of the automatic lathe such that the bar-guiding channel system can be moved synchronously with the spindle head (4.10, 11.1) in drag operation, wherein a transition tube (4.9) is provided between the channel system (4.2) and the spindle head (4.10, 11.1),
wherein the transition tube (4.9) couples the spindle head (4.10, 11.1) of the automatic lathe to the channel system in a non-positive manner, so that the spindle head (4.10, 11.1) and the channel system (4.2) are coupled to one another by a mechanical connection,
and/or, wherein the channel system is driven by an NC axis or a linear motor, wherein the control of the NC axis (6.2) or of the linear motor (7.1) takes place by the automatic lathe so that the spindle head (4.10) is coupled to the channel system (4.2) by an electronic connection.

2. Device according to claim 1, **characterized in that** the longitudinal movement of the channel system (4.2) mechanically coupled to the spindle head (4.10) can be supported by the NC axis or the linear motor.

3. Device according to one of claims 1 through 2, **characterized in that** the loading magazine in addition comprises a drive (4.6) and a push rod with a clamping sleeve (4,7), wherein the push rod is moveable with the clamping sleeve in the longitudinal direction and is suitable for the forward feed of the bar material.

4. Device according to claim 3, **characterized in that** the drive (4.6) and the push rod with the clamping sleeve can be moved independently of the channel system.

5. Device according to claim 4, **characterized in that** the drive and the push rod with the clamping sleeve can be moved via a synchronization device (9.1).

6. Device according to one of claims 1 through 4, **characterized in that** the loading magazine (5.1) can be moved jointly with the channel system.

7. Device according to one of claims 1 through 6, **characterized in that** between the loading magazine (4.1, 5.1) and the transition tube and/or between the transition tube and the spindle head (4.10) at least one additional lathe steady (3.4) is provided.

8. Device according to one of claims 1 through 7, **characterized in that** the diameters of the transition tube (10.1) and a spindle bore (10.2) in the spindle head (4.10) can be reduced by tubular inserts (10.3).

9. Device according to one of claims 1 through 8, **characterized in that** the loading magazine is coupled or can be coupled to a spindle head (4.10), embodied as a main spindle head, of the automatic lathe for feeding bar material and loading the automatic lathe with bar material.

10. Device according to one of claims 1 through 8, **characterized in that** the loading magazine is coupled or can be coupled to a spindle head (11.1), embodied as a tailstock, of the automatic lathe for guiding out bar material and unloading the automatic lathe.

11. A system comprising a first and a second loading magazine (4.1, 5.1), so as defined in one of claims 1 through 8, and an automatic lathe, wherein however the first loading magazine (4.1, 5.1) is coupled to a spindle head (4.10), embodied as a main spindle head, of the automatic lathe, and the second is coupled to a spindle head (11.1) embodied as a tailstock.

12. Loading magazine for guiding bar material on an automatic lathe with at least one spindle head (4.10, 11,1) that is displaceable in the longitudinal direction, wherein the loading magazine (4.1) comprises a bar material -guiding channel system (4.2), which system comprises at least one upper channel (4.3), a lower channel (4.4) and a channel opening system (4.5), **characterized in that** at least the channel system (4,2) of the loading magazine (4.1) is guided on a linear axis (5.2) and thereby can be coupled to the spindle head (4.10, 11.1), which can be moved in a longitudinal manner, of the automatic lathe such that the bar-guiding channel system can be moved synchronously with the spindle head (4.10, 11.1) in drag operation, wherein a transition tube (4.9) is provided between the channel system (4.2) and the spindle head (4.10, 11.1),
wherein by means of the transition tube (4.9) the spindle head (4.10, 11.1) of the automatic lathe can be coupled to the channel system in a non-positive manner, so that the spindle head (4.10, 11.1) and the channel system (4.2) can be coupled to one another by a mechanical connection,
and/or, wherein the channel system is driven by an NC axis or a linear motor, wherein the NC axis (6.2) or of the linear motor (7.1) can be controlled by the automatic lathe so that the spindle head (4.10) can be coupled to the channel system (4.2) by an electronic connection.

13. Loading magazine according to claim 12 with the features of a loading magazine according to a device according to one of claims 1 to 10.

## Revendications

1. Tour automatique comprenant un magasin de chargement (4.1) destiné à guider des tiges de matériau sur le tour automatique, comprenant au moins une poupée (4.10, 11.1,) mobile dans la direction longitudinale,
dans lequel le magasin de chargement (4.1) contient un système de canaux (4.2) guidant les tiges de matériau, lequel comprend au moins un canal supérieur (4.3), un canal inférieur (4.4) et un système d'ouverture de canal (4.5), **caractérisé en ce qu'**au moins le système de canaux (4.2) du magasin de chargement (4.1) est guidé sur un axe linéaire (5.2) et accouplé à la poupée (4.10, 11.1) à déplacement longitudinal du tour automatique, de telle sorte que le système de canaux (4.2) guidant les tiges peut être déplacé de manière synchrone avec la poupée (4.10, 11.1) à déplacement longitudinal en mode entraîné,
dans lequel un tube de transition (4.9) est prévu entre le système de canaux (4.2) et la poupée (4.10, 11.1) à déplacement longitudinal,
dans lequel le tube de transition relie à force la poupée (4.10, 11.1) à déplacement longitudinal du tour automatique au système de canaux, de sorte que la poupée (4.10, 11.1) à déplacement longitudinal et le système de canaux (4.2) sont accouplés l'un à l'autre par une liaison mécanique,
et/ou, dans lequel le système de canaux est entraîné par un axe à commande numérique ou un moteur linéaire, dans lequel la commande de l'axe à commande numérique (6.2) ou du moteur linéaire (7.1) est effectuée par le tour automatique et la poupée (4.10) est accouplée au système de canaux (4.2) par une liaison électronique.

2. Dispositif selon la revendication 1, **caractérisé en ce que** le déplacement longitudinal du système de canaux (4.2) accouplé mécaniquement à la poupée (4.10) peut être assisté par l'axe à commande numérique (6.2) ou le moteur linéaire (7.1).

3. Dispositif selon l'une quelconque des revendications 1 et 2, **caractérisé en ce que** le magasin de chargement (4.1) comprend en plus un entraînement (4.6) et une bielle pourvue d'un manchon de serrage (4.7), dans lequel la bielle peut être déplacée avec le manchon de serrage (4.7) dans la direction longitudinale et est adaptée pour faire avancer les tiges de matériau.

4. Dispositif selon la revendication 3, **caractérisé en ce que** l'entraînement (4.6) et la bielle pourvue du manchon de serrage (4.7) peuvent être déplacés indépendamment du système de canaux.

5. Dispositif selon la revendication 4, **caractérisé en ce que** l'entraînement et la bielle pourvue du manchon de serrage (4.7) peuvent être déplacés au moyen d'un dispositif de synchronisation (9.1).

6. Dispositif selon l'une quelconque des revendications 1 à 4, **caractérisé en ce que** le magasin de chargement (5.1) peut être déplacé conjointement avec le système de canaux.

7. Dispositif selon l'une quelconque des revendications 1 à 6, **caractérisé en ce qu'**au moins une lunette (3.4) supplémentaire est prévue entre le magasin de chargement (4.1, 5.1) et le tube de transition et/ou entre le tube de transition et la poupée (4.10).

8. Dispositif selon l'une quelconque des revendications 1 à 7, **caractérisé en ce que** les diamètres du tube de transition (10.1) et d'un trou de broche (10.2) dans la poupée (4.10) peuvent être réduits par des inserts (10.3) tubulaires.

9. Dispositif selon l'une quelconque des revendications 1 à 8, **caractérisé en ce que** le magasin de chargement est accouplé ou peut être accouplé à une poupée (4.10) du tour automatique réalisée sous la forme d'une poupée principale pour amener des tiges de matériau et charger le tour automatique en tiges de matériau.

10. Dispositif selon l'une quelconque des revendications 1 à 8, **caractérisé en ce que** le magasin de chargement est accouplé ou peut être accouplé à une poupée (11.1) du tour automatique réalisée sous la forme d'une poupée complémentaire pour faire sortir les tiges de matériau et décharger le tour automatique.

11. Système comprenant un premier et un deuxième magasin de chargement (4.1, 5.1) comme cela est défini dans l'une quelconque des revendications 1 à 8, ainsi qu'un tour automatique, dans lequel le premier magasin de chargement (4.1, 5.1) est cependant accouplé à une poupée (4.10) du tour automatique réalisée sous la forme d'une poupée principale, et le deuxième magasin de chargement est accouplé à une poupée (11.1) réalisée sous la forme d'une poupée complémentaire.

12. Magasin de chargement (4.1) destiné à guider des tiges de matériau sur un tour automatique, comprenant au moins une poupée (4.10, 11.1,) mobile dans la direction longitudinale,
dans lequel le magasin de chargement (4.1) contient un système de canaux (4.2) guidant les tiges de matériau, lequel comprend au moins un canal supérieur (4.3), un canal inférieur (4.4) et un système d'ouverture de canal (4.5), **caractérisé en ce qu'**au moins le système de canaux (4.2) du magasin de chargement (4.1) est guidé sur un axe linéaire (5.2) et peut être accouplé à la poupée (4.10, 11.1) à déplacement longitudinal du tour automatique, de telle sorte que le système de canaux (4.2) guidant les tiges peut être déplacé de manière synchrone avec la poupée (4.10, 11.1) à déplacement longitudinal en mode entraîné,
dans lequel un tube de transition (4.9) est prévu entre le système de canaux (4.2) et la poupée (4.10, 11.1) à déplacement longitudinal,
dans lequel au moyen le tube de transition est peut être relié à force la poupée (4.10, 11.1) à déplacement longitudinal du tour automatique au système de canaux, de sorte que la poupée (4.10, 11.1) à déplacement longitudinal et le système de canaux (4.2) sont peut être accouplés l'un à l'autre par une liaison mécanique,
et/ou, dans lequel le système de canaux est entraîné par un axe à commande numérique ou un moteur linéaire, dans lequel l'axe à commande numérique (6.2) ou du moteur linéaire (7.1) est peut être commandé par le tour automatique et la poupée (4,10) est peut être accouplée au système de canaux (4.2) par une liaison électronique.

13. Magasin de chargement selon la revendication 12 avec les facilités d'un magasin de chargement selon d'un dispositif selon l'une quelconque des revendications 1 à 10.
